# EUROPEAN PATENT APPLICATION

(11) **EP 4 717 837 A2**
(43) Date of publication of application: **01.04.2026**
(21) Application number: 25202787.5
(22) Date of filing: 17.09.2025
(51) Int. Cl.: E03C 1/04, E03C 1/05

(54) **VISUALLY GUIDED EXPERIENCES**

(30) Priority: 25.09.2024 US 202463698864 P; 16.09.2025 US 202519329825
(71) Applicant: Kohler Mira Limited, Cheltenham, Gloucestershire GL52 5EP (GB)
(72) Inventor: BLENKARN, Daniel, CHELTENHAM, GL52 5EP (GB); ADEY, John, Cheltenham, GL52 5EP (GB); LEA, Ben, Cheltenham, GL52 5EP (GB)
(74) Representative: Barker Brettell LLP

(57) **Abstract**

A device may be provided in a shower setting to provide users with a visually guided experience. For example, the device may be programmed to guide users through breathing exercises, guided meditations, or other functions during a shower experience. The device may include a display and at least one control feature. The shower may be configured to perform a cold plunge function, and the device may be programmed to portray a dynamic graphic and a timer graphic via the display while the shower performs the cold plunge function. The dynamic graphic may guide users through breathing exercises during the cold plunge function, and the timer graphic may provide an indication of an amount of time remaining before the cold plunge function ends.

## Description

### Cross-Reference to Related Applications

The present application claims priority from U.S. Provisional Patent Application No. 63/698,864., filed September 25, 2024, and U.S. Patent Application No. 19/329,825, filed September 16, 2025.

### Background

Users can enjoy health and wellness benefits by performing breathing exercises, meditating, and engaging in other wellness-related activities during a shower experience. However, inexperienced users may benefit from assistance or guidance in this regard. For example, those who do not practice breathing techniques regularly may be unfamiliar with the appropriate intervals for inhaling, exhaling, and holding their breath.

### Brief Description of the Drawings

FIG. 1 is a schematic view of a shower system including an example device.
FIG. 2 is a schematic view of an example device in a default mode.
FIG. 3 is a schematic view of an example device in an initiation mode.
FIG. 4 is a schematic view of an example device in a countdown mode.
FIG. 5A is a first schematic view of an example device in a functional mode.
FIG. 5B is a second schematic view of an example device in a functional mode.
FIG. 5C is a third schematic view of an example device in a functional mode.
FIG. 5D is a fourth schematic view of an example device in a functional mode.
FIG. 5E is a fifth schematic view of an example device in a functional mode.

While the disclosure is susceptible to various modifications and alternative forms, a specific example of a device according to the present disclosure is shown in the drawings and will herein be described in detail. It should be understood, however, that the drawings and detailed description presented herein are not intended to limit the disclosure to the particular example disclosed, but to the contrary, the intention is to cover all modifications, equivalents, and alternatives falling within the spirit and scope of the present disclosure as defined by the appended claims.

### Detailed Description

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

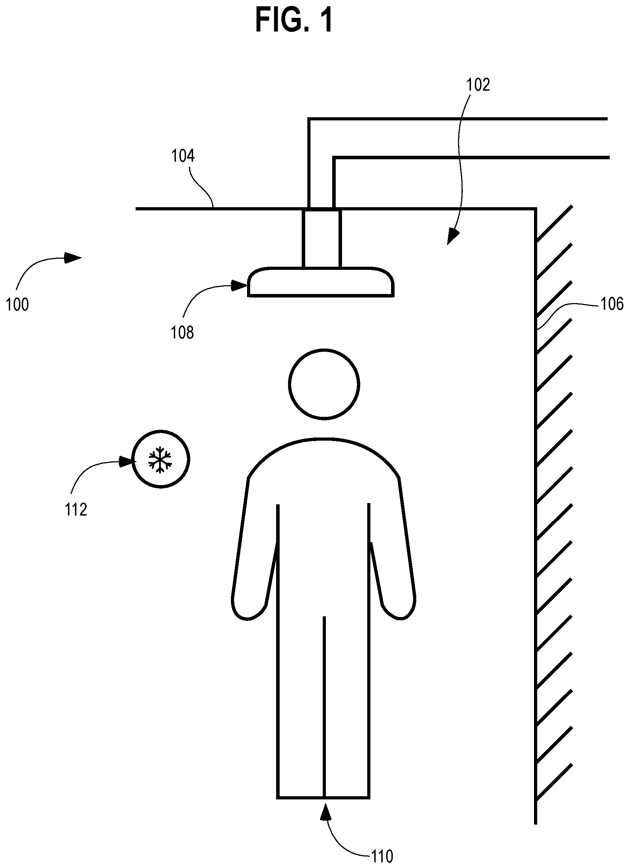

Referring first to FIG. 1, a shower 100 may include an enclosure 102 defined by a ceiling 104 and one or more walls 106. At least one shower outlet 108 may be configured to expel water into the enclosure 102 such that a user 110 may stand within the enclosure 102 in the path of the water expelled from the shower outlet 108 when using the shower 100. In the example of FIG. 1, the shower outlet 108 is coupled to the ceiling 104. However, in other instances, one or more additional or alternative shower outlets 108 may be coupled to an upper portion of one or more of the walls 106 or in another location.

The shower 100 may include a device 112 positioned within the enclosure 102. For example, the device 112 may be coupled to one of the walls 106. As described below, the device 112 may be provided in the form of an input/output (I/O) device configured to, for example, display information to the user 110 regarding the operation of the shower 100 and/or receive inputs from the user 110. In some instances, the device 112 may be configured to display dynamic graphics designed to guide the user 110 through guided breathing exercises or other experiences designed to supplement or complement use of the shower 100.

The shower 100 may additionally include one or more lighting systems, one or more sound-generating components (e.g., speakers), one or more scent-generating components, and/or other components. The device 112 may be configured to operate or control the one or more lighting systems, sound-generating components, scent-generating components, and/or other components of the shower 100.

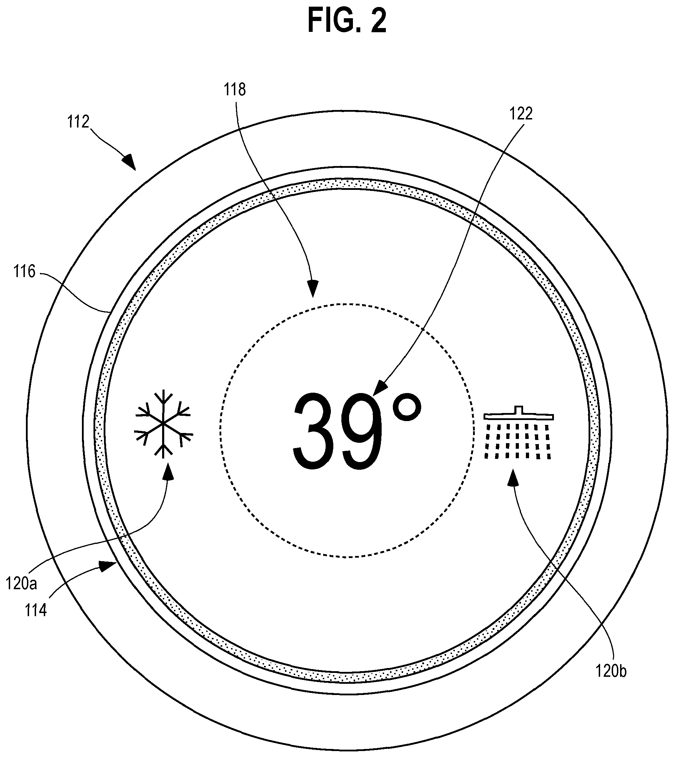

Turning to FIG. 2, the device 112 is depicted in a default mode. The device 112 may occupy the default mode during normal operation of the shower 100. For example, the device 112 may enter the default mode when the user 110 turns the shower 100 on and may remain in the default mode until another mode of the device 112 is initiated by the user 110. The device 112 may be operatively connected to the shower outlet 108, one or more pipes or valves of the shower 100, and/or other components of the shower 100. Thus, the device 112 may function as a control unit whereby the device 112 is configured to alter or adjust the operation of the shower 100 in response to inputs received from the user 110.

In some cases, the device 112 may be provided in the form of a substantially circular body 114 defined by an outer perimeter 116. The device 112 may include one or more user input devices such as buttons, knobs, dials, bezels, levers, touchscreens, and the like. For example, the device 112 may include a display 118 positioned on the body 114 in a substantially central location and one or more control features 120 positioned proximate to the outer perimeter 116. The display 118 may be provided in the form of an LCD screen or a touch screen, or the display 118 may be provided in any other suitable form. In the default mode, the display 118 may include a temperature indicator 122 configured to display a real-time measurement of the water temperature or a target temperature to the user 110.

In the example of FIG. 2, the device 112 has two control features 120 including a first control feature 120a and a second control feature 120b. In other instances, the body 114 may have any shape or size. Additionally, in other instances, the display 118 may be positioned in any suitable location on the body 114, and the device 112 may include any number of control features 120 arranged in any suitable configuration. The control features 120 may be provided in the form of a mechanical or tactile button that requires the user 110 to physically depress the control feature 120. Alternatively, the control features 120 may be provided in the form of independent touch screens or a single touch screen operatively divided into multiple segments, each segment acting as a control feature 120. In still other instances, the control features 120 may be provided in another known or foreseeable form (e.g., voice controls).

The shower 100 may be configured to provide one or more shower experiences to the user 110. For example, the shower 100 may be configured to perform one or more scripted user experiences, as described in U.S. Patent Pub. No. 2023/0294120, the entire contents of which are hereby incorporated by reference herein. The various shower experiences may be preprogrammed (e.g., stored via a memory) such that, once a shower experience is initiated, no further action is required from the user 110 to control operation of the shower 100 during the shower experience. Shower experiences may involve preprogrammed changes in water temperature, water pressure, a spray mode or spray pattern of the shower outlet 108, and/or other settings of the shower 100. Shower experiences may also involve the introduction of sensory stimuli via components of the shower 100 such as lighting systems, sound-emitting components, scent-emitting components, and the like. Thus, the shower 100 may be configured to provide a multi-sensory shower experience.

The device 112 may enable the user 110 to initiate a variety of shower experiences or functions of the shower 100 and may be configured to provide guidance (e.g., audio and/or visual indicators) tailored to the selected experience. The device 112 may be operably connected to one or more valves, outlets, nozzles, attachments (e.g., the shower outlet 108), and/or other components of the shower 100 to perform the selected function or provide the selected experience. Similarly, the device 112 may be configured to control one or more lighting systems, sound systems, and/or other components of the shower 100 to provide visual, audio, and/or other sensory stimuli during the selected shower experience.

As an example, the shower experiences may include a "cold plunge" function, a "spa" function, a "meditation" function, and/or other functions designed to promote wellness and/or enhance the experience of the user 110 while the shower 100 is in use.

A cold plunge function of the shower 100 may be configured to mimic a true cold plunge experience where an individual submerges themselves in a tub of cold water for a specified duration. For example, the cold plunge function may involve altering an operation of the shower 100 (e.g., switching to supply water from an independent, chilled water source) such that cold water is provided to the user 110 for a specified duration. The display 118 may provide information regarding water temperature, duration, and/or other metrics during the cold plunge function. Likewise, speakers integrated into the device 112 or mounted elsewhere within the shower 100 may instruct or guide the user 110 through one or more scripted breathing exercises.

A spa function of the shower 100 may include providing alternating bursts or streams of hot water and cold water, modulating a water pressure or spray mode of the shower outlet 108 and/or other functions. For example, the spa function may include a spray pattern with high or alternating water pressure designed to provide a massaging effect to the user 110. The display 118 may provide information regarding water temperature, duration, water pressure, a position of the showerhead, and/or other information during the spa function.

A meditation function of the shower 100 may include holding the water temperature, water pressure, and/or other settings at a comfortable level (e.g., holding water temperature and pressure constant). For example, the device 112 may select a gentle spray mode of the shower outlet 108 such that the spray pattern of the water is not jarring or attention-grabbing. The device 112 may provide guidance to the user 110 regarding proper breathing patterns, where to direct their attention, etc. For example, the display 118 may provide the user 110 with a focal point and speakers integrated into the device 112 or mounted elsewhere within the shower 100 may provide audible instructions to guide the user 110 through a meditation.

In the specific example depicted in FIGS. 2-5E and discussed in detail below, the device 112 is configured to perform a cold plunge function. Thus, the first control feature 120a is depicted showing a snowflake icon. However, it should be understood that in other implementations and applications, the device 112 may be configured to perform a different function-or a variety of functions-and the control features 120 and/or other user input devices of the device 112 may be provided in a different form.

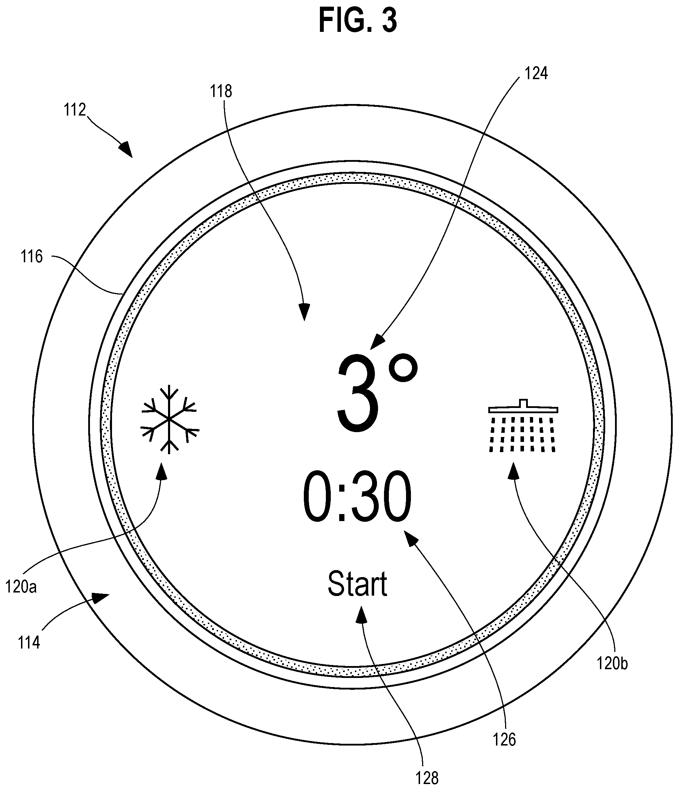

Turning to FIG. 3, the device 112 may enter an initiation mode once the user 110 initiates the cold plunge function by pressing the first control feature 120a. In the initiation mode, the display 118 may include a functional temperature indicator 124 and a duration indicator 126. In the initiation mode, the device 112 may also include a start button 128. For example, the start button 128 may be provided in the form of an additional control feature 120 provided in substantially the same form as the first and second control features 120a, 120b. Alternatively, in instances where the display 118 is provided in the form of a touch screen, the start button 128 may be provided in the form of a segment of the display 118 configured to detect when the start button 128 is pressed by the user 110.

When the device 112 is in the initiation mode, the functional temperature indicator 124 may display a target temperature of the cold plunge function, and the device 112 may enable the user 110 to adjust the target temperature before beginning the cold plunge function (e.g., via the display 118, control features 120, and/or other user input device). The duration indicator 126 may display a target duration for the cold plunge function, and the device 112 may enable the user 110 to adjust the target duration in the same manner as the target temperature. The user 110 may begin the cold plunge function by pressing the start button 128 when the device 112 is in the initiation mode.

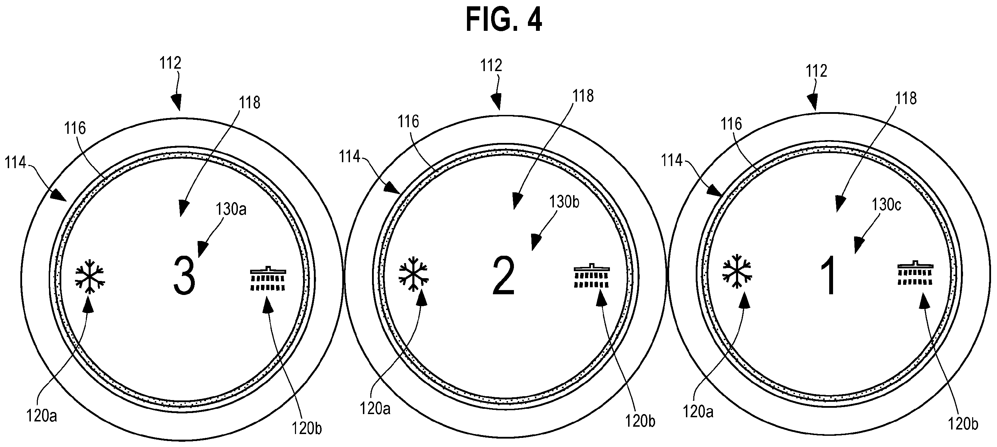

Turning to FIG. 4, the device 112 may enter a countdown mode when the user 110 presses the start button 128. The display 118 may display a series of countdown indicators 130 designed to inform the user as to the exact moment in time when the cold plunge function or other function of the shower 100 will begin. For example, in the illustrated example, the display 118 is configured to display three countdown indicators 130a-130c between the user pressing the start button 128 and the device 112 initiating the cold plunge function. The display 118 may display the first countdown indicator 130a three seconds before the cold plunge function begins, the second countdown indicator 130b two seconds before the cold plunge function begins, and the third countdown indicator 130c one second before the cold plunge function begins. In other instances, the display 118 may be configured to display any number of countdown indicators 130 in any suitable manner. Once the final countdown indicator 130 is displayed, the device 112 may automatically terminate the countdown mode.

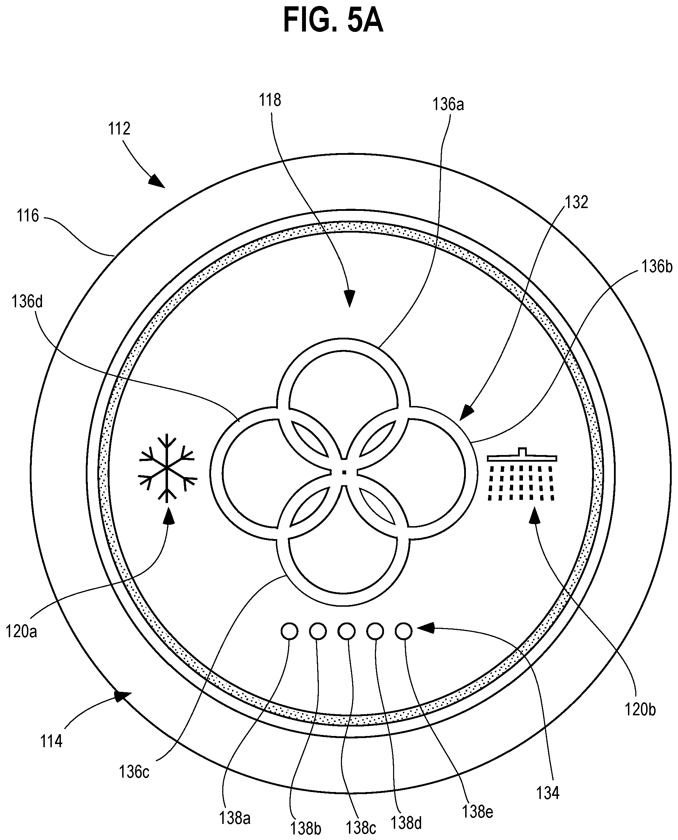

Turning to FIGS. 5A-5E, the device 112 may enter a functional mode when the countdown mode terminates and the cold plunge function or other function of the shower 100 begins. When the device 112 is in the functional mode, the display 118 may include an animation or dynamic graphic 132 and a timer graphic 134. The dynamic graphic 132 may display visual indicators, guides, symbols, etc. designed to guide the user 110 through, for example, guided breathing exercises while the shower 100 performs the cold plunge function. The timer graphic 134 may be configured to provide an indication of an amount of time remaining in the cold plunge function. The shower 100 may operate in an autonomous or a semi-autonomous manner when the device 112 is in the functional mode.

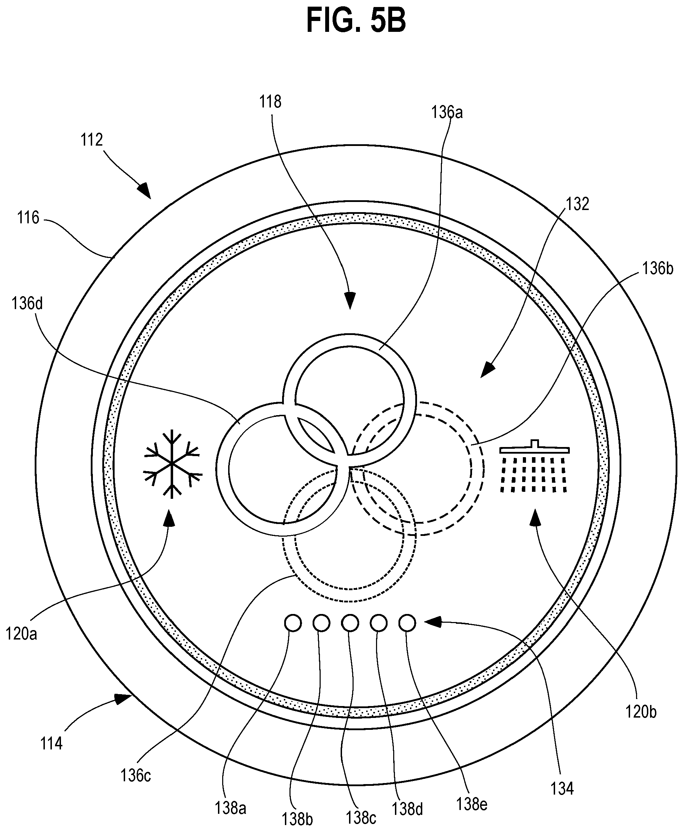

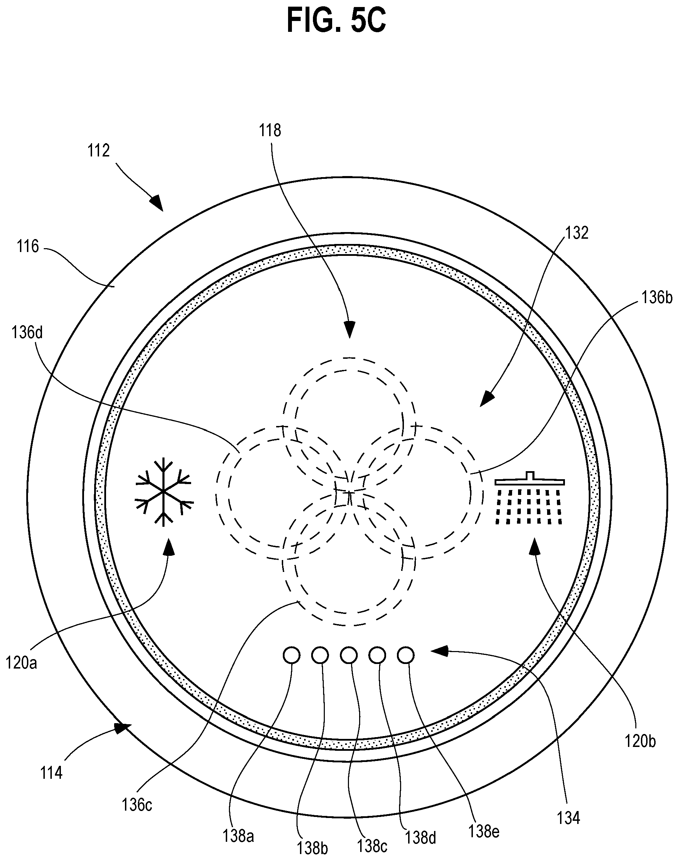

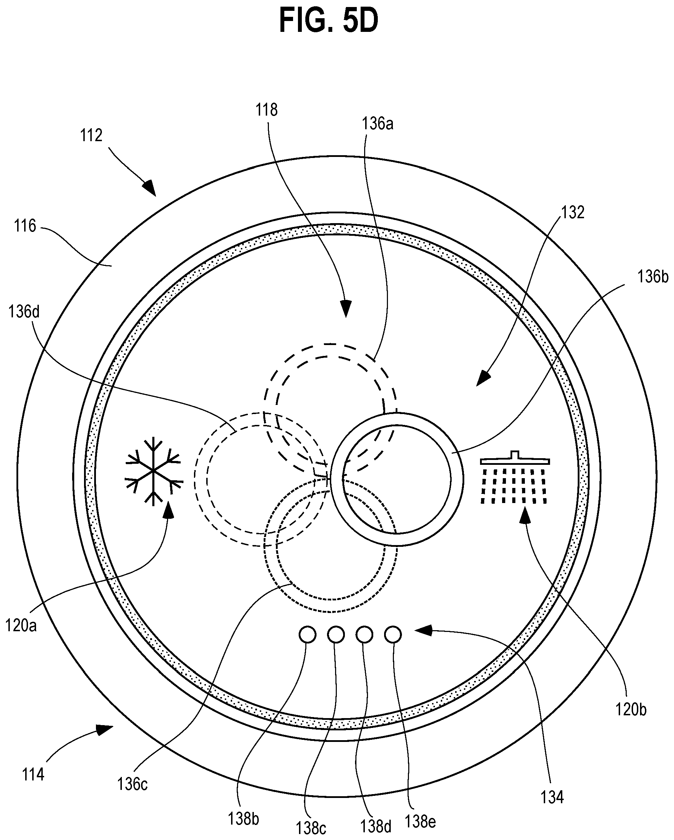

The dynamic graphic 132 may be configured to display a variety of dynamic or animated visuals, symbols, or graphical representations to the user 110. In the illustrated example, the dynamic graphic 132 includes a collection of interconnected or overlapping rings 136. The rings 136 may be configured to gradually fade into and out of view in a cyclical manner, and the status or brightness of the rings 136 may correspond to a desired state of the breath of the user 110. For example, FIG. 5A depicts a first stage of the dynamic graphic 132 where each of the rings 136 is visible or fully illuminated, FIG. 5B depicts a second stage of the dynamic graphic 132 where the rings 136 are gradually fading from view or where the brightness of the rings 136 is being gradually reduced, FIG. 5C depicts a third stage of the dynamic graphic 132 where each of the rings 136 is hidden or minimally illuminated, and FIG. 5D depicts a fourth stage of the dynamic graphic 132 where the rings 136 are gradually fading into view or where the brightness of the rings 136 is being gradually increased.

The rings 136 are depicted with a variety of line styles in FIGS. 5A-5E, and the line styles may correspond to varying degrees of brightness or opacity of the rings 136. For example, in FIG. 5A, each of the rings 136a-d is depicted with solid lines that indicate that the rings 136a-d are illuminated with a first level of brightness or opacity (e.g., a maximum level of brightness or opacity). In FIG. 5B, the rings 136a, 136d are depicted with solid lines indicating the first level of brightness or opacity; however, the ring 136c is depicted with a first dashed style that indicates a second level of brightness or opacity (i.e., the second level of brightness or opacity may less than the first level of brightness or opacity), and the ring 136b is depicted with a second dashed style that indicates a third level of brightness or opacity (i.e., the third level of brightness or opacity may be less than the first and second levels of brightness or opacity). In other words, FIG. 5B depicts a stage of the operational cycle of the device 112 in which the rings 136a, 136d are fully illuminated but the rings 136b, 136c have begun to fade from view. In FIG. 5C, the rings 136a-d are each depicted with a third dashed style that indicates a fourth level of brightness or opacity (e.g., a minimum level of brightness or opacity). For example, the fourth level of brightness or opacity may be less than the first, second, and third levels of brightness or opacity. In other words, FIG. 5C depicts a stage of the operational cycle of the device 112 in which the rings 136a-136d have each faded from view. Finally, in FIG. 5D, the rings 136a-136d are depicted gradually fading back into view. For example, the ring 136b is depicted with solid lines indicating that the ring 136b has returned to the first level of brightness or opacity, the ring 136c is depicted with the first dashed style indicating that the ring 136c has returned to the second level of brightness or opacity, the ring 136d is depicted with the second dashed style indicating that the ring 136d has returned to the third level of brightness or opacity, and the ring 136a is depicted with the third dashed style indicating that the ring 136a remains at the fourth level of brightness or opacity.

The first stage of the dynamic graphic 132 where each of the rings 136 is visible or fully illuminated (see, e.g., FIG. 5A) may correspond to an interval within the guided breathing exercise during which the user 110 should be holding their breath at the end of an inhale. The third stage of the dynamic graphic 132 where each of the rings 136 is hidden or minimally illuminated (see, e.g., FIG. 5C) may correspond to an interval within the guided breathing experience during which the user 110 should be holding their breath at the end of an exhale. Thus, the amount of time that the dynamic graphic 132 idles or remains in the first stage may provide guidance to the user 110 regarding how long to hold the breath at the end of an inhale, and the amount of time that the dynamic graphic 132 idles or remains in the third stage may provide guidance to the user 110 regarding how long to hold the breath at the end of an exhale.

The second stage of the dynamic graphic 132 where the rings 136 are gradually fading from view or where the brightness of the rings 136 is being gradually reduced (see, e.g., FIG. 5B) may correspond to an interval within the guided breathing exercise during which the user 110 should be exhaling. The fourth stage of the dynamic graphic 132 where the rings 136 are gradually fading into view or where the brightness of the rings 136 is being gradually increased (see, e.g., FIG. 5D) may correspond to an interval within the guided breathing exercise during which the user 110 should be inhaling. Thus, the speed with which the rings 136 fade out of view during the second stage of the dynamic graphic 132 may provide guidance to the user 110 regarding the desired length or duration of an exhale, and the speed with which the rings 136 fade into view during the fourth stage of the dynamic graphic 132 may provide guidance to the user 110 regarding the desired length or duration of an inhale.

It will be appreciated by those skilled in the art that the device 112 may be configured to guide the user 110 through a variety of different breathing exercises. For example, the device 112 may be configured to guide the user 110 through a first breathing exercise or a second breathing exercise, depending on the exercise selected by the user 110. The first breathing exercise may be a box breathing exercise where the first, second, third, and fourth stages of the dynamic graphic 132 may each have a duration of approximately four seconds. The second breathing exercise may be a diaphragmatic breathing exercise where the first and third stages of the dynamic graphic 132 have a short duration (e.g., one second) and the second and fourth stages of the dynamic graphic 132 have a long duration (e.g., eight seconds or ten seconds). However, the device 112 may be configured to guide the user 110 through one or more additional and/or alternative breathing exercises relative to the first and second breathing exercises described above, and the various breathing exercises may include a first, second, third, and fourth stage (or additional or fewer stages) having any suitable duration.

Accordingly, the device 112 may be preprogrammed to alter the manner in which the dynamic graphic 132 progresses through the first, second, third, and fourth stages depending on the desired breathing exercise. Alternatively, the device 112 may store multiple different dynamic graphics 132 corresponding to multiple preprogrammed breathing exercises.

In the illustrated example, the dynamic graphic 132 may include four rings 136 including a first ring 136a, a second ring 136b, a third ring 136c, and a fourth ring 136d. The rings 136a-136d may be configured to fade into and out of view in a sequential manner. For example, during the second stage of the dynamic graphic 132, the first ring 136a may fade from view first, followed by the second ring 136b, then the third ring 136c, and finally the fourth ring 136d. Likewise, during the fourth stage of the dynamic graphic 132, the first ring 136a may fade into view first, followed by the second ring 136b, then the third ring 136c, and finally the fourth ring 136d.

In other instances, the dynamic graphic 132 may include any number of rings 136 arranged in any suitable pattern. Alternatively, in some instances, the rings 136 may be omitted and the dynamic graphic 132 may be designed in any way provided that the dynamic graphic 132 includes some form of motion or animation that guides or aids users in performing, for example, guided breathing exercises. For example, the dynamic graphic 132 may include a representation of a flower with petals that gradually open and close, a geometric shape or pattern that gradually expands and contracts, or other graphical representations designed to guide the user 110.

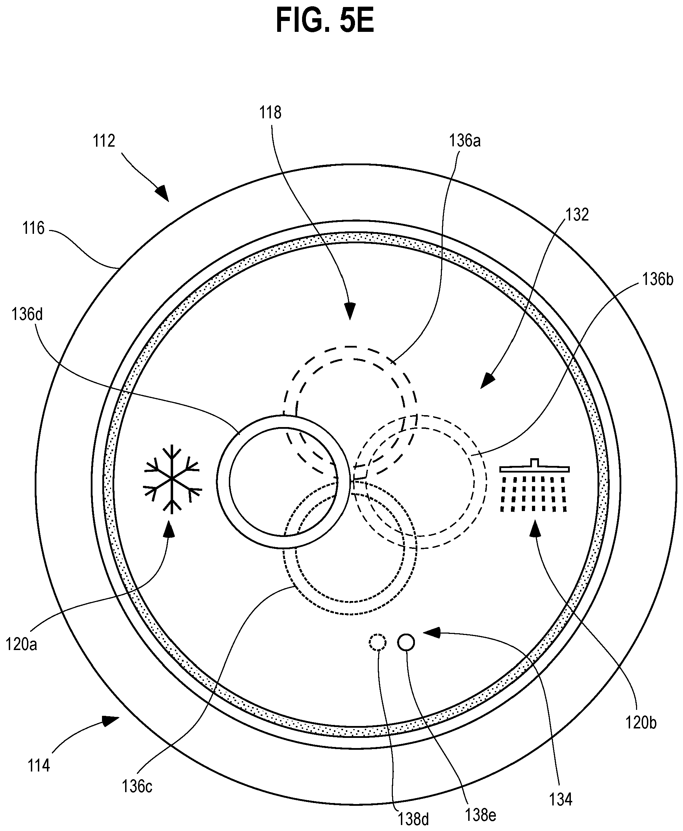

The timer graphic 134 may be designed to provide an indication of a remaining duration of the cold plunge function or other function of the shower 100. In some instances, the timer graphic 134 may include a series of illuminated dots 138. In the illustrated example, the timer graphic 134 includes five dots 138a-138e arranged in a linear pattern and positioned below the dynamic graphic 132. All five dots 138a-138e may be illuminated at the beginning of the cold plunge function. As the cold plunge function progresses, the dots 138a-138e may darken in sequence to provide a visual indication of an amount of time that has elapsed. For example, as shown in FIG. 5D, the first dot 138a may darken after a predetermined amount of time has passed since the cold plunge function began such that the first dot 138a is no longer visible. As shown in FIG. 5E, the device 112 is depicted after a further amount of time has passed since the cold plunge function began and the first, second, and third dots 138a-138c have darkened such that they are no longer visible.

In some instances, each dot 138 may darken after a predetermined time interval to provide a measure of an amount of time that has elapsed. As a non-limiting example, in some instances, the cold plunge function may be programmed to last for a total duration of five minutes. In these instances, each dot 138 may be programmed to remain illuminated for a standardized or predetermined period of time. For example, the first dot 138a may remain illuminated for one minute, the second dot 138b may remain illuminated for two minutes, the third dot 138c may remain illuminated for three minutes, the fourth dot 138d may remain illuminated for four minutes, and the fifth dot 138e may remain illuminated for five minutes. In other instances, the total duration of the cold plunge function and the amount of time that each dot 138 remains illuminated may differ.

In some instances, each dot 138 may be configured to occupy an intermediate state where the dot 138 is partially illuminated such that the brightness of the dot 138 is reduced but the dot 138 remains visible. With reference to the non-limiting example discussed above, each of the dots 138a-138e may be programmed to enter the intermediary state thirty seconds before the dot 138 is programmed to darken such that it is no longer visible. For example, the first dot 138a may remain fully illuminated for thirty seconds and may remain partially illuminated for thirty seconds after that, the second dot 138b may remain fully illuminated for one and a half minutes and may remain partially illuminated for thirty seconds after that, the third dot 138c may remain fully illuminated for two and a half minutes and may remain partially illuminated for thirty seconds after that, the fourth dot 138d may remain fully illuminated for three and a half minutes and may remain partially illuminated for thirty seconds after that, and the fifth dot 138e may remain fully illuminated for four and a half minutes and may remain partially illuminated for thirty seconds after that. For example, FIG. 5E may depict the device 112 approximately three and a half minutes after the cold plunge function begins. Thus, as shown in FIG. 5E, the first, second, and third dots 138a-138c may no longer be visible, the fourth dot 138d may occupy the intermediate state and may be partially illuminated (as indicated by the dashed-line style of the fourth dot 138d in FIG. 5E), and the fifth dot 138e may be fully illuminated.

In other instances, the amount of time that passes between the dot 138 entering the intermediate state and the dot 138 darkening such that it is no longer visible may be different. In some instances, the intermediate state may be omitted and each dot 138 may be configured to be either fully illuminated or fully darkened.

In other instances, the timer graphic 134 may be positioned anywhere on the device 112. In some instances, the dots 138 may be omitted and the timer graphic 134 may include other symbolic indicators of the remaining duration of the cold plunge function. In still other instances, the timer graphic 134 may be provided in the form of a digital clock or countdown timer.

In some instances, the device 112 may include a speaker for providing audio feedback or guidance to the user 110. For example, the speaker may provide audible indicators as time elapses such as by emitting a beep or other audio signal each time one of the dots 138 darkens.

Additionally, or alternatively, the device 112 may be configured to provide audio guidance to the user 110. For example, the audio guidance may supplement the dynamic graphic 132 and audibly guide the user 110 through breathing exercises, may guide the user 110 through a meditation or other experience, and/or may perform other functions.

The device 112 may aid or supplement the cold plunge function or other functions of the shower 100. For example, the cold temperatures experienced by the user 110 during the cold plunge function may cause the user to experience a shock reflex, shortness of breath, and/or other physiological reactions, and the device 112 may provide a focal point where the user 110 can concentrate and counteract the physiological reactions triggered by the cold temperatures. The device 112 may also guide the user 110 through breathing exercises, as described above, or through other scripted or preprogrammed experiences such as a guided meditation. In this way, the device 112 may introduce a wellness component to the shower experience.

It should be understood that, while the above description pertains to a cold plunge function provided by the shower 100, the device 112 may be configured for use in a wide variety of implementations and applications. For example, the dynamic graphic 132 and the timer graphic 134 may be replaced by alternative and/or additional graphics, indicators, or symbols when the device 112 is in the functional mode, depending on the application. The shower 100 may be configured to provide a selection of shower experiences to the user 110 (e.g., a cold plunge function, spa function, meditation function, and/or other functions), and the device 112 may be preprogrammed to provide a variety of scripted guidance or instructions depending on the shower experience selected by the user 110.

The present disclosure is disclosed in the context of shower systems but is not limited to shower systems. Aspects of the present disclosure that are depicted in the illustrated embodiments or otherwise described herein may be used in conjunction with other ablutionary fittings or water distribution systems. Water distribution systems encompassed by the present disclosure include, without limitation, water distribution systems that dispense water for consumption and/or washing and water distribution systems used for private, public, domestic, residential, commercial, and/or industrial use. Water distribution systems such as, for example and without limitation, showers, baths, washtubs, hot tubs, sinks, fountains, water dispensers, and the like may incorporate aspects of the present disclosure and are encompassed herein. Example water distribution systems may include an outlet dispensing water or other fluid. The outlet may include any suitable device that is configured to dispense liquid or water. The outlet may include an ablutionary fitting, such as, for example and without limitation, a showerhead, shower spray, wand hand shower, faucet, wand, spigot, tap, spout, or the like. The outlet can include a single outlet or more than one outlet. Where the outlet includes multiple, e.g., two or more outlets, the outlets can be similar types of outlets or dissimilar types of outlets. Elements and features described with reference to one illustrated embodiment are not limited to that embodiment only; the features and elements of any one or more of the illustrated embodiments can be utilized in any other embodiment in any combination.

As is evident from the foregoing description, certain aspects of the present invention are not limited by the particular details of the examples illustrated herein, and it is therefore contemplated that other modifications, applications, variations, or equivalents thereof, will occur to those skilled in the art. Many such changes, modifications, variations, and other uses and applications of the present constructions will, however, become apparent to those skilled in the art after considering the specification and the accompanying drawings. In addition, unless mention was made above to the contrary, it should be noted that all of the accompanying drawings are not to scale. All such changes, modifications, variations, and other uses and applications which do not depart from the spirit and scope of the present inventions are deemed to be covered by the inventions which are limited only by the claims which follow.

## Claims

1. A shower, comprising:
a showerhead; and
a device having a display and one or more control features, the device positioned on a wall of the shower,
wherein the device is configured to guide a user through breathing exercises during a shower experience.

2. The shower of claim 1, wherein at least one of the one or more control features is operable by the user to initiate the shower experience.

3. The shower of claim 2, wherein the device enters an initiation mode in response to the user initiating the shower experience, and wherein the display portrays a start button that is operable by the user to begin the shower experience when the device is in the initiation mode.

4. The shower of claim 3, wherein the device enters a countdown mode in response to the user engaging the start button, and wherein the device portrays a series of countdown indicators when the device is in the countdown mode prior to the beginning of the shower experience.

5. The shower of claim 2, claim 3 or claim 4, wherein the shower experience is a cold plunge experience, and wherein the device causes the showerhead to expel cold water in response to the user initiating the cold plunge experience.

6. The shower of any one of the preceding claims, wherein the device portrays a dynamic graphic designed to guide the user during the shower experience.

7. The shower of claim 6, wherein the dynamic graphic comprises a plurality of overlapping rings that gradually fade in and out of view, optionally wherein the rate at which the plurality of overlapping rings fade in and out of view corresponds to a target breath rate of the user during the shower experience.

8. The shower of any one of the preceding claims, wherein: (i) the device portrays a timer graphic indicating a remaining duration of the shower experience; and/or (ii) the display is provided in the form of a touch screen including the one or more control features; and/or (iii) the device is configured to enter a default mode when the user turns on the shower, wherein the display portrays a temperature indicator that provides a real-time measurement of water temperature when the device is in the default mode.

9. An ablutionary device, comprising:
a body;
one or more control features positioned on the body; and
a display positioned on the body,
wherein a user initiates a cold plunge function of the ablutionary device by engaging one of the one or more control features, and
wherein the display portrays a dynamic graphic designed to guide the user through breathing exercises as the cold plunge function progresses.

10. The ablutionary device of claim 9, wherein the dynamic graphic comprises a plurality of overlapping features that gradually fade in and out of view, optionally wherein the rate at which the plurality of overlapping features fade in and out of view corresponds to a target breath rate of the user during the shower experience.

11. The ablutionary device of claim 9 or claim 10, wherein the display also portrays a timer graphic indicating a remaining duration of the shower experience.

12. The ablutionary device of claim 11, wherein the timer graphic comprises a plurality of illuminated dots.

13. The ablutionary device of claim 12, wherein the plurality of illuminated dots are each illuminated at the beginning of the shower experience.

14. The ablutionary device of claim 13, wherein the plurality of illuminated dots sequentially fade from view as the remaining duration of the shower experience approaches zero, optionally wherein each illuminated dot of the plurality of illuminated dots is designed to occupy an intermediate state in which the respective illuminated dot is partially illuminated for a predetermined time period before fading from view.

15. A method of performing a cold plunge function in a shower, comprising:
providing a device in the shower, the device having a display and at least one control feature;
initiating an initiation mode of the device by engaging one of the at least one control features;
initiating a countdown mode of the device by engaging a start button of the device while the device is in the initiation mode; and
initiating a functional mode of the device by waiting for a countdown to finish while the device is in the countdown mode,
wherein the shower performs the cold plunge function when the device is in the functional mode, and
wherein the display portrays a dynamic graphic and a timer graphic while the device is in the functional mode.
